# EUROPEAN PATENT SPECIFICATION

(11) **EP 2 256 359 B1**
(45) Date of publication and mention of the grant of the patent: **21.05.2014**
(21) Application number: 09722557.7
(22) Date of filing: 10.03.2009
(51) Int. Cl.: F16D 48/02, F16H 61/02, F16H 61/08, F16H 59/04, F16H 59/14, F16H 59/44, F16H 59/56, F16H 59/70, F16H 61/682, F16D 48/08, F16H 61/688

(54) **ACCELERATION CONTROL APPARATUS FOR AUTOMOBILE DUAL-CLUTCH TRANSMISSION**
BESCHLEUNIGUNGSSTEUERUNGSVORRICHTUNG FÜR EIN FAHRZEUGGETRIEBE MIT DOPPELKUPPLUNG
APPAREIL DE COMMANDE D'ACCÉLÉRATION POUR TRANSMISSION À DOUBLE EMBRAYAGE D'AUTOMOBILE

(30) Priority: 18.03.2008 JP 2008069569
(43) Date of publication of application: 01.12.2010
(73) Proprietor: Isuzu Motors Limited, Tokyo 140-8722 (JP)
(72) Inventor: KOGA, Hidetaka, Fujisawa-shi Kanagawa 252-8501 (JP)
(74) Representative: MERH-IP Matias Erny Reichl Hoffmann
(86) International application number: PCT/JP2009/054493
(87) International publication number: WO 2009/116418

(56) References cited:
- EP-A2- 1 382 479
- EP-A2- 1 524 456
- WO-A1-2004/096597
- WO-A1-2006/137591
- DE-A1- 10 043 060
- JP-A- 2005 121 113
- JP-A- 2005 329 813
- JP-A- 2007 057 042
- JP-A- 2007 100 891
- US-B1- 6 394 931

## Description

### Technical Field:

This invention relates to a transmission in a power transmission device of vehicles, i.e., to a dual clutch type transmission having two transmission input shafts coupled to an engine, respectively, through friction clutches and for changing the speed while controlling the engaging states of the two friction clutches at the time of changing the speed.

### Background Art:

In order to facilitate the driving of vehicles and to reduce fatigue to the drivers in recent years, there have been developed a variety of kinds of automatic power transmission devices for automotive use. A representative example may be an automatic transmission combining a torque converter and a planetary gear mechanism together, as is now widely used as a power transmission of the so-called automatic transmission vehicles (AT vehicles). In addition to the automatic transmissions, there is also available a power transmission device that uses a transmission of the type of parallel shaft gear mechanism as used in the manual transmission vehicles (MT Vehicles) in combination with an automatically operated clutch to shift the gear in response to a speed-change instruction from an electronic controller or the like.

In an automatic speed-changing device using a transmission of the type of parallel shaft gear mechanism, there is no loss of transmission caused by the interposition of the torque converter more excelling in fuel economy of the vehicles than the automatic transmissions but producing a larger shock of shift than that of the automatic transmissions. In the transmission of the type of parallel shaft gear mechanism, a friction clutch is disconnected between the engine and the transmission at the time of changing the speed to shift the gear train for transmitting the power. Therefore, the transmission of power is interrupted for a period of time though it is short. In the automatic transmission which changes the speed by controlling the engaging state of the wet type multiple disk clutches provided in the planetary gear mechanism or engaging state of the brake, on the other hand, the transmission of power is not substantially interrupted even at the time of changing the speed, and a little shock is produced by the change of speed.

As the transmission of the type of parallel shaft gear mechanism, there has been known a transmission called dual clutch type transmission (or twin clutch type transmission) equipped with two friction clutches and two transmission input shafts coupled to the respective friction clutches to prevent the shock by continuing the transmission of power even at the time of changing the speed as disclosed by, for example, JP-A-8-320054.

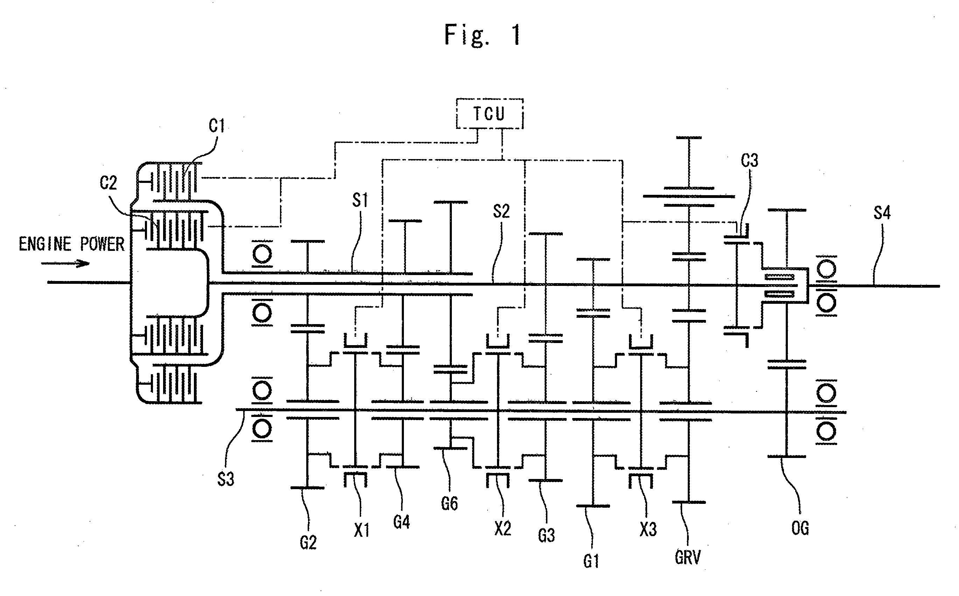

In the dual clutch type transmission as shown in Fig. 1, a first input shaft S1 and a second input shaft S2 are arranged to constitute a double tubular structure, the second input shaft S2 extending rearward penetrating through the first hollow input shaft S1. In front of the transmission, there are arranged a first friction clutch C1 and a second friction clutch C2 on the inner side and on the outer circumferential side in concentric, and the input sides of the respective friction clutches are connected to the engine output shaft. The friction clutches in this example are wet type multiple disk clutches, the output shaft of the first friction clutch C1 being integrally coupled to the first hollow input shaft S1 and the output shaft of the second friction clutch C2 being integrally coupled to the second input shaft S2. The two friction clutches may be arranged in parallel in the axial direction instead of being arranged in concentric, and the dry type single disk clutches may be used instead of the wet type multiple disk clutches.

An intermediate shaft (counter shaft) S3 is arranged in parallel with the first input shaft S1 and the second input shaft S2. On each input shaft, there are arranged the gear trains of every other speeds relative to the intermediate shaft. In other words, in the dual clutch type transmission, the gear trains of neighboring speeds (gears), such as first speed and second speed, second speed and third speed, are arranged on the separate input shafts. The dual clutch type transmission of Fig. 1 has six forward gears (inclusive of a directly coupled gear) and a reverse gear. On the first hollow input shaft S1, there are arranged fixed gears of even speeds, such as a second speed gear train G2, a fourth speed gear train G4 and a sixth speed gear train G6. On the second input shaft S2, on the other hand, there are arranged a first speed gear train G1 and a third speed gear train G3 which are the odd speed gears, as well as a fixed gear of a reverse gear train GRV. The fixed gears are in mesh with free-fit gears that are freely fitted to the intermediate shaft S3, i.e., that are rotatably fitted thereto. Among the free-fit gears, there are arranged a second speed-fourth speed changing device X1, a sixth speed-third speed changing device X2, and a first speed-reverse gear changing device X3.

The changing devices are constituted as dog clutches having speed-changing sleeves to mesh with dog teeth (gear splines) formed integrally with the free-fit gears and synchronizer mechanisms, that are, usually, used in the transmission of the type of parallel shaft gear mechanism. At the rear end of the intermediate shaft S3, there is provided an output shaft drive gear train OG that drives the output shaft S4 at a reduced speed and at the rear end of the second input shaft S2, there is provided a direct connection clutch C3 of the type of dog clutch that directly connects to the output shaft S4 to serve as the fifth speed of the transmission. In the transmission of Fig. 1, the free-fit gears and the dog clutches are installed on the intermediate shaft S3. However, the gears of the intermediate shaft S3 may be the fixed gears, and the gears on the first input shaft S1 and on the second input shaft S2 may be the free-fit gears, and the dog clutches (changing devices) may be formed thereon. To transmit the engine power with a given speed, the speed-changing sleeve of a changing device is brought in mesh with the free-fit gear of that speed. Hereinafter, the operation for bringing the speed-changing sleeve into mesh with the free-fit gear of the speed is called "shift to the speed".

If a vehicle is traveling, for example, at the second speed, the first friction clutch C1 is connected while the second friction clutch C2 is disconnected, and the second speed-fourth speed changing device X1 is shifted to the second speed. The engine power drives the intermediate shaft S3 through the first input shaft S1 coupled to the first friction clutch C1 and through the second speed gear train G2 and, further, drives the output shaft S4 through the output shaft drive gear train GO at the rear end. To shift the second speed to the third speed, the first friction clutch C1 is disconnected, the sixth speed-third speed changing device X2 is shifted to the third speed, and the second friction clutch C2 is connected. After the gear has been shifted, the engine power is transmitted to the intermediate shaft S3 through the second input shaft S2 and through the third speed gear train G3, and drives the output shaft S4 through the output shaft drive gear train GO. The dual clutch type transmission is provided with a transmission control unit TCU which works to automatically disconnect the friction clutches and to shift the speed depending upon the traveling conditions of the vehicle.

The dual clutch type transmission includes the first input shaft S1 and the second input shaft S2 coupled to the friction clutches, respectively, the input shafts being allowed to rotate independently of each other. At the time of shifting the second speed to the third speed, therefore, it becomes possible to bring the sixth speed-third speed changing device X2 in mesh with the third speed prior to disconnecting the first friction clutch C1 and prior to disengaging the second speed-fourth speed changing device X1. Thus, after having shifted the sixth speed-third speed changing device X2 to the third speed, if the engaging states of the two friction clutches are so controlled as to connect the second friction clutch C2 while disconnecting the first friction clutch C1, then the speed is shifted without substantially interrupting the transmission of engine power and, therefore, the speed is shifted free of shock of shift. When the changing device is shifted to the third speed, further, the synchronizer mechanism is operated. Here, however, the time margin is large for synchronization. If compared with the synchronizer mechanism in ordinary transmissions of the type of parallel shaft gear mechanisms, therefore, it is allowed to decrease the load such as frictional force acting on the synchronizer mechanism.

In the dual clutch type transmission, the changing devices can be placed being shifted to two speeds in advance at the start of the vehicle. JP-A-2007-170640 discloses a method of controlling the start by setting the input shafts to the first speed and to the second speed, respectively, at the start, and dividing the transmission torque for start at a required ratio on the two friction clutches.
Patent document 1: JP-A-8-320054
Patent document 2: JP-A-2007-170640

EP 1382 479 A2 describes a method which involves preparing for driving off by engaging first and second forward driving off gears in association with first and second gearbox input shafts, whereby the second forward driving off gear has a lower ratio than the first, or holding them in the engaged state when appropriate.

### Disclosure of the Invention:

### Problems that the Invention is to Solve:

A freight vehicle such as a truck has a total vehicle weight that differs by more than two times depending upon when it is full of load or is empty, and a large difference occurs in the traveling condition depending upon the amount of load it carries. Therefore, the transmissions for freight vehicles, in general, are so designed that the first speed has a large reduction ratio for obtaining a sufficiently large driving force (torque) so that the vehicle even full of load can start moving on the way of a steep uphill road. In practice, it is attempted to start the vehicle with the first speed in limited circumstances only and in other circumstances or in so-called ordinary conditions, it is attempted to start the vehicle with the second speed (second-speed start) avoiding the traveling with the first speed in which the speed rises only a little. An automatic transmission mechanism of freight vehicles is so constituted as to start with the second speed in an ordinary drive mode (D-range) and to be shifted to the start with the first speed if a driver manipulates a first-speed start switch, etc.

In the freight vehicle mounting the dual clutch type transmission, in order to execute the start with the second speed, the dual clutch type transmission is shifted to the gear train of the second speed coupled to the first friction clutch and is also shifted in advance to the gear train of the third speed coupled to the second friction clutch, too, prior to the start of the vehicle. At the start, the second friction clutch and the first friction clutch are disconnected, and the second friction clutch is gradually engaged depending upon the depression of the accelerator pedal to start traveling with the second speed. If the speed increases enough to be shifted up to the third speed after the first friction clutch has been completely connected, the second friction clutch is gradually connected while disconnecting the first friction clutch. At this moment, since the shift to the gear train of the third speed has been finished in advance, the speed after the start can be smoothly changed in a short period of time.

With the dual clutch type transmission having been shifted to the second speed and to the third speed as described above, the vehicle is usually allowed to start traveling smoothly. However, if the freight vehicle full of load attempts to make a start on the way of a steep uphill road, the driving force may not be sufficient with the second speed, and the transmission must be shifted down to the first speed. The shift-down is automatically executed if, for example, the second friction clutch slips to an excess degree. To shift the dual clutch type transmission down to the first speed, however, the gear train of the third speed coupled to the second friction clutch is disengaged to shift the gear to the gear train of the first speed and, thereafter, the second friction clutch is connected while disconnecting the first friction clutch. Much operation is required during this period, and a considerable period of time is needed for shifting down to the first speed. The shift down to the first speed is executed on a steep uphill road. Therefore, if a long period of time is needed for changing the speed, then an increased load is exerted on the engine often causing the engine to be halted or permitting the vehicle to move back.

The problem of the present invention is concerned with a dual clutch type transmission for freight vehicles wherein the second-speed start is, usually, executed but in case the drive torque is not sufficient, the transmission is automatically so controlled as can be shifted down in a short period of time to solve the above-mentioned problems.

### Means for Solving the Problems:

The above-described problems are solved by the invention according to the independent claim. Further preferred developments are described by the dependent claims.

In view of the above problems according to the present invention, if the freight vehicle is to be started from its halted state, the dual clutch type transmission is set to the state of being shifted to the first speed and to the second speed, and the second-speed start is executed by gradually increasing the amount of connection of the friction clutch coupled to the gear train of the second speed. If it is decided that the driving force is insufficient, the transmission is controlled so as to be readily shifted to the first speed. That is, the present invention is concerned with a start control apparatus for controlling, at the start, a dual clutch type transmission mounted on a freight vehicle: wherein
the dual clutch type transmission comprises two input shafts coupled to an engine through friction clutches, respectively, and a plurality of gear trains provided on each of the two input shafts so as to constitute every other speeds; and
the start control apparatus comprises driving power judging means for judging if the driving power is insufficient at the start of the freight vehicle; and wherein
when the freight vehicle is at a halt, the dual clutch type transmission is set to a state of being shifted to the first speed and to the second speed;
at the start of the freight vehicle, the amount of connection of the friction clutch coupled to the gear train of the second speed is increased to have the vehicle start moving and, after the passage of a predetermined period of time, the driving force is judged by the driving force judging means; and
if it is so judged that the driving force is insufficient, the amount of connection of the friction clutch coupled to the gear train of the first speed is increased, and the amount of connection of the friction clutch coupled to the gear train of the second speed is decreased.

As described in claim 1, at the start of the freight vehicle, if it is so judged by the driving force judging means that the driving force is not insufficient, the start control apparatus desirably shifts the dual clutch type transmission from the first speed to the third speed.

As described in claim 2, the start control apparatus detects a state of connection of the friction clutch coupled to the gear train of the second speed at the start of the freight vehicle, and if the connection is completed before the passage of the predetermined period of time, judging of the driving force by the driving force judging means is desirably prohibited.

As described in claim 3, further, the start control apparatus is provided with a first-speed start switch to be operated by a driver and, if the first-speed start switch is operated while the freight vehicle is at a halt, the control operation is desirably prohibited at the start of the freight vehicle.

As the driving force judging means as described in claim 4, there can be used an apparatus that judges the excess or insufficiency of driving force from a relationship of a vehicle speed or a vehicle acceleration relative to the accelerator opening degree. Or, as described in claim 5, there may be used an apparatus that judges the excess or insufficiency of driving force from the amount of slip of the friction clutch coupled to the gear train of the second speed or from the energy absorbed by the clutch.

### Effects of the Invention:

According to the start control apparatus of the invention which controls the dual clutch type transmission at the start of the freight vehicle, first, the dual clutch type transmission is set to a state of being shifted to the first speed and to the second speed while the freight vehicle is at a halt. To have the vehicle started, the amount of connection of the friction clutch coupled to the gear train of the second speed is gradually increased. Namely, the start control apparatus of the invention basically so works as to have the freight vehicle started with the second speed. Usually, therefore, the second-speed start is executed except particular situations such as the start on a steep uphill road carrying heavy loads. Therefore, the vehicle smoothly accelerates free of offensive drive feeling such as sluggish acceleration after the start.

The start control apparatus of the present invention comprises driving power judging means for judging if the driving power is excessive or insufficient, and decides the excess or insufficiency of driving force based on the traveling conditions of the engine after a predetermined period of time has passed from the start with the second speed. As a result, if it is judged that the driving force is insufficient, the friction clutch of the first speed is connected while the friction clutch of the second speed is gradually disconnected, and transmission is shifted to the first speed. This situation occurs on a steep uphill road. The dual clutch type transmission, however, has already been shifted to the first speed and there is no need of operating the changing device at this moment. Accordingly, the dual clutch type transmission is shifted down to the first speed in a short period of time without any shock of shift, and the engine is prevented from coming into a stall or the vehicle is prevented from moving back even on an uphill road. As concretely described in claims 5 and 6, further, the driving force judging means executes the function of only judging the excess or insufficiency of driving force, and is simply constituted.

In the invention, if the driving force judging means so judged that the driving force is not insufficient at the time of start, the dual clutch type transmission is shifted from the first speed to the third speed. With the start control apparatus of the present invention, the dual clutch type transmission has been set to the first speed and to the second speed prior to the start. To shift the dual clutch type transmission to the third speed after having started with the second speed, therefore, the changing device that has been shifted to the first speed must be operated so as to be shifted to the third speed. Here, however, the shift-up does not have to be executed as quickly as when shifting the transmission down to the first speed on the uphill road. Further, at the time of ordinary start with the second speed, the traveling with the second speed continues for some period of time providing a sufficient time margin for the shifting operation to the third speed. In particular, upon executing the shift-up to the third speed at a moment when it is judged by the driving force judging means that the driving force is sufficient as in the invention of claim 2, the transmission becomes ready to be quickly shifted up upon having confirmed that no shift-down to the first speed is necessary.

As in the invention of claim 2, when the friction clutch coupled to the gear train of the second speed is completely connected at the time of start before the driving force judging means renders the decision, the subsequent control operation is prohibited. Or, as in the invention of claim 3, provision is made of a first-speed start switch to be operated by a driver, and if this switch is operated, then the control operation at the time of start is prohibited. In these cases, useless control operations or manipulations are prohibited, the time for processing the control is shortened, and undesired outcomes can be avoided that may stem from unexpected erroneous operations, etc.

In the start control apparatus for a dual clutch type transmission disclosed in the patent document 2, too, the input shafts are shifted to the first speed and to the second speed at the start of the vehicle. In this start control apparatus, however, the friction clutch of the first speed is, first, connected to get started (sharing ratio for the friction clutch of the second speed is 0) and, thereafter, the two friction clutches share the transmission torque at a predetermined ratio. This, however, is not to have the freight vehicle started with the second speed unlike that of the present invention. Further, this start control apparatus effects neither a control operation using a simple device such as driving force judging means nor the shift from the first speed to the third speed, and the above-mentioned actions and effects of the present invention are not realized.

### Brief Description of the Drawings:

[Fig. 1] is a diagram schematically and entirely illustrating a dual clutch type transmission.
[Fig. 2] is a view showing in detail a speed-changing device in the dual clutch type transmission.
[Fig. 3] is a flowchart of a start control apparatus of the present invention.
[Fig. 4] is a diagram showing changes in the amounts of connection of friction clutches in the present invention.

### Description of Reference Numerals:

- S1: first input shaft
- S2: second input shaft
- S3: intermediate shaft
- S4: output shaft
- C1: first friction clutch
- C2: second friction clutch
- G1, G2, G3, G4, G6: gear trains
- X1, X2, X3: speed-changing devices
- TCU: transmission control unit

### Best Mode for Carrying Out the Invention:

Described below with reference to the drawings is a start control apparatus for a dual clutch type transmission of the present invention mounted on freight vehicles. Here, however, the structure and the basic operation of the dual clutch type transmission to which the start control apparatus of the invention is applied are the same as those of the dual clutch type transmission shown in Fig. 1 and described in the background of the invention. The start control apparatus of the present invention is incorporated as a unit in the transmission control unit TCU of Fig. 1.

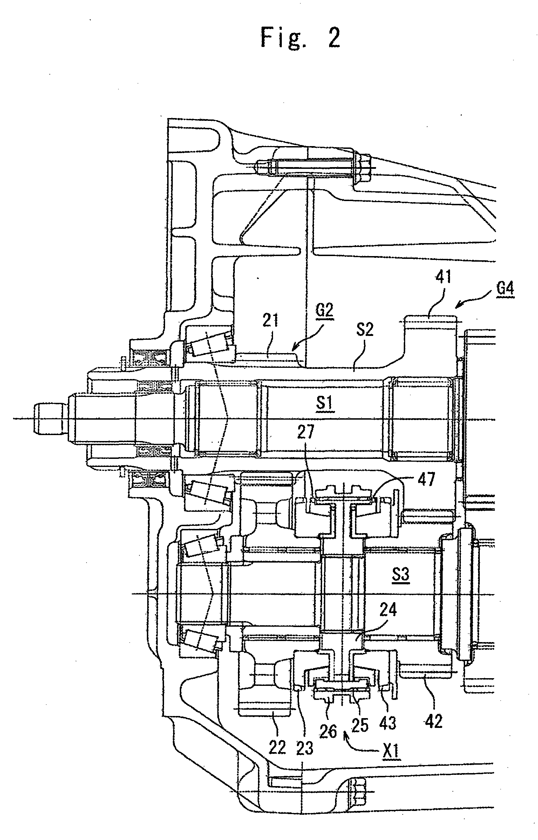

In the start control apparatus of the present invention, the dual clutch type transmission is set by the transmission control unit TCU to the state of being shifted to the first speed and to the second speed at the start of the vehicle. Here, a concrete structure of the speed-changing device will be described with reference to Fig. 2 which is a view showing in detail the second speed-fourth speed changing device X1. The changing device is a dog clutch-type changing device that is usually used for the transmissions of the type of parallel shaft gear mechanism, and the first speed-reverse gear changing device X3 and the like devices, too, have a similar structure.

On a first hollow input shaft S1, there are integrally formed a fixed gear 21 of a second-speed gear train G2 and a fixed gear 41 of a fourth-speed gear train G4, which are in mesh with a free-fit gear 22 of the second speed and a free-fit gear 42 of the fourth speed, respectively. The two free-fit gears have dog teeth 23 and 43 formed integrally therewith and between them, a clutch hub 24 is fixed onto an intermediate shaft S3. Onto the outer circumference of the clutch hub 24, there is fitted a speed-changing sleeve 26 having a spline 25 to mesh with the dog teeth 23, 43 and to slide in the axial direction. Synchronizer rings 27 and 47 are arranged among the dog teeth 23, 43 and the speed-changing sleeve 26. Though not shown, a bifurcated speed-changing fork is fitted into a groove in the outer circumference of the speed-changing sleeve 26 to move the speed-changing sleeve 26 in the axial direction.

If the speed-changing sleeve 26 is moved by the speed-changing fork toward the left in the drawing, the spline 25 of the speed-changing sleeve 26 meshes with the dog teeth 23 of the free-fit gear 22 of the second speed, and the first input shaft S1 of the dual clutch type transmission is placed in the state of being shifted to the second speed. At this moment, the synchronizer ring 27 prevents the speed-changing sleeve 26 from moving until the rotational speed of the intermediate shaft S3 is brought into synchronism with the rotational speed of the free-fit gear 22. If the speed-changing sleeve 26 is slid toward the right in the drawing, the transmission is shifted to the fourth speed. At the start according to the present invention, the first input shaft S1 of the dual clutch type transmission is shifted to the second speed, and the second input shaft S2 is shifted to the first speed by the first speed-reverse gear switching device X3.

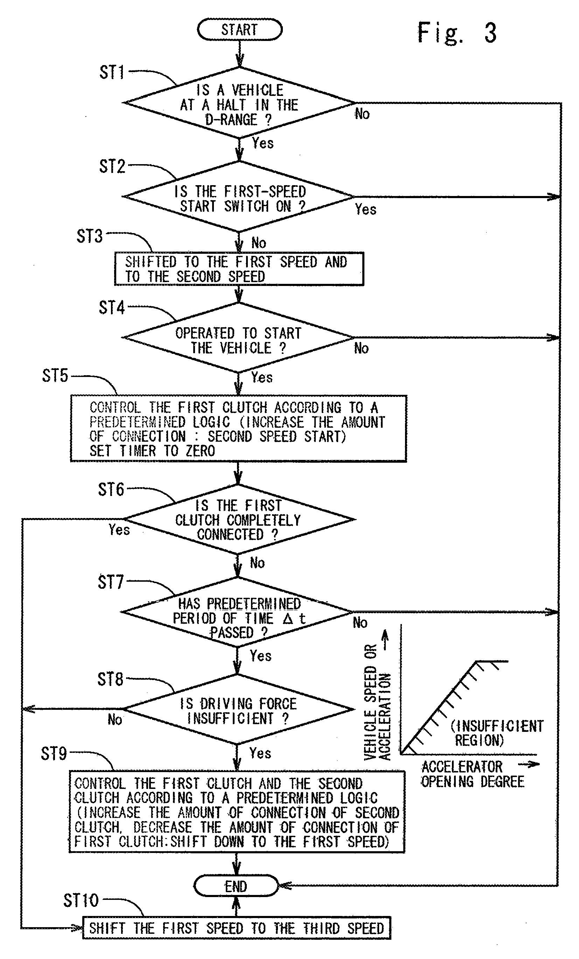

Next, the constitution and operation of the start control apparatus of the embodiment of the invention will be described with reference to a flowchart shown in Fig. 3.

On starting the flowchart of start control, first, it is decided at step ST1 if the freight vehicle is at a halt in the D-range state (if the vehicle is halted to move back). The start control apparatus of this embodiment is provided with a first-speed start switch and if the decision at step ST1 is YES, it is detected at step ST2 if the first-speed start switch is operated. If it is operated, the start with the first speed is executed without proceeding to the subsequent steps. In the present invention, if the driving force with the second speed is insufficient, the transmission is automatically shifted down to the first speed. Therefore, even if the driver forgets to operate the first-speed start switch, the friction clutches are not damaged by slipping.

If the first-speed start switch has not been operated, the routine proceeds to step ST3 where the dual clutch type transmission is placed in a state of being shifted to the first speed and to the second speed. Further, the start operation of the vehicle is monitored (step ST4), and the routine proceeds to step ST5 at a moment when the driver begins to depress the accelerator pedal. Here, the first friction clutch C1 connected to the gear train of the second speed starts connected and at the same time, the timer is set to 0 to start counting the passage of time. The amount of connecting the first friction clutch C1 is increased according to predetermined control logic at the time of start.

In the state where the dual clutch type transmission is shifted to the first speed and to the second speed, therefore, the second-speed start is executed using the gear train of the second speed. In an ordinary case, the amount of connecting the first friction clutch at the start increases smoothly and the vehicle speed increases accordingly. The start control apparatus of this embodiment monitors the amount of connection of the first friction clutch C1 (step ST6). If the first friction clutch C1 is completely connected and the amount of slip becomes 0 before the time counted by the timer reaches a predetermined time, it is regarded that the vehicle has started smoothly and the routine proceeds to step ST10 where transmission is shifted from the first speed to the third speed.

After having commenced the connection of the first friction clutch C1, if it is so decided at step ST7 that the time counted by the timer has reached a predetermined period of time, the routine proceeds to step ST8 where it is decided if the driving force is insufficient. The predetermined period of time is so set that the clutch will not be damaged even if the first friction clutch C1 has slipped to an excess degree.

Deciding if the driving force is insufficient at step ST8 is to judge if it is necessary to shift the speed down to the first speed. For this decision as schematically shown in the diagram on the right side of step ST8, the accelerator opening degree and the vehicle speed or the vehicle acceleration are detected at a moment when a predetermined period of time has passed to judge if the vehicle speed, etc. are in excess of predetermined values that correspond to the accelerator opening degree and, therefore, to judge excess or insufficiency of the driving force. This is because if the amount of connecting the first friction clutch C1 in the initial period of start increases and the vehicle speed increases to meet the accelerator opening degree, then the driving force is sufficiently maintained to meet the vehicle conditions, and the vehicle starts normally.

If the driving force is insufficient at the start, the amount of slip of the first friction clutch C1 becomes excessive as a matter of course. Therefore, the decision of insufficiency can also be rendered by detecting the amount of slip of the clutch, i.e., by detecting a difference between the rotational speed of the engine and the rotational speed of the first input shaft S1 of the transmission after the passage of a predetermined period of time. Instead of detecting the amount of slip itself, it may be also allowed to judge that the driving force is insufficient in case that the energy absorbed by the first friction clutch C1 up to the passage of a predetermined period of time i.e., the integrated value calculated from <the engine torque x the amount of slip of the clutch> has exceeded a predetermined value.

Under ordinary vehicle conditions, the vehicle normally starts traveling even with the second speed and it is decided at step ST8 that the driving force is not insufficient. At this moment, the second-speed start continues and the freight vehicle smoothly accelerates. If it is decided at step ST8 that the driving force is not insufficient, the routine proceeds to step ST10 where the first speed-reverse gear changing device X3 is disengaged from the gear train of the first speed, the sixth speed-third speed changing device X2 is brought in mesh with the gear train of the third speed to shift the second input shaft S2 from the first speed to the third speed. If the vehicle accelerated with the second-speed start reaches a speed in the region of the third speed, the transmission control unit TCU disconnects the first friction clutch C1, connects the second friction clutch C2, and shifts the transmission to the third speed.

At the start on the way of a steep uphill load carrying a heavy load, if it is decided at step ST8 that the driving force is insufficient, the routine proceeds to step ST9 to execute the shift down to the first speed. In the start control apparatus of the present invention, the second input shaft S2 has already been shifted to the gear train G1 of the first speed. Therefore, the shift down is quickly executed by connecting the second friction clutch C2 and disconnecting the first friction clutch C1. Therefore, the transmission of the vehicle is shifted to the first speed in a short period of time without the shock of shift to produce a sufficiently large driving force enabling the vehicle to smoothly start even on the way of an uphill road avoiding such an unexpected occurrence that the vehicle moves back.

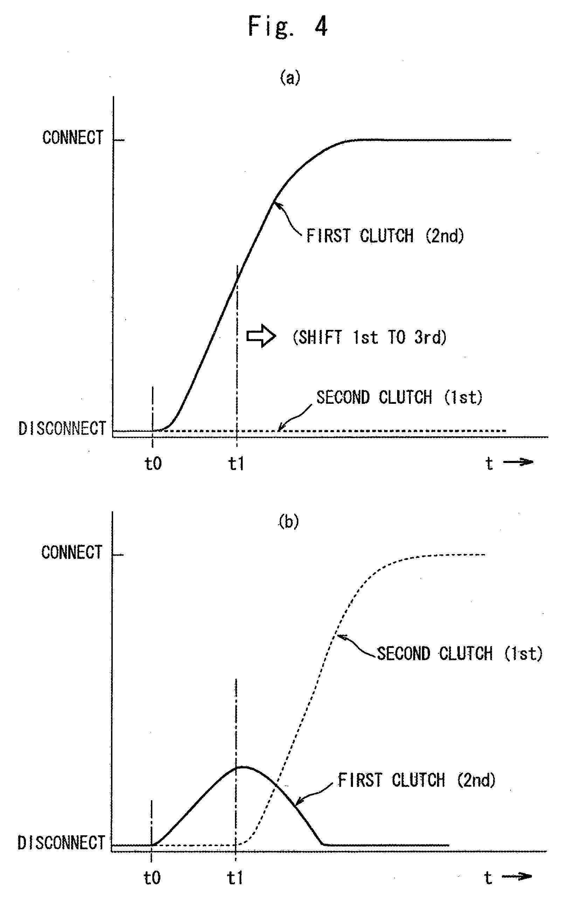

Fig. 4 shows changes in the amounts of connection of the two friction clutches in the start control apparatus of the present invention with the passage of time. At the start of the vehicle, first, the control commences to increase the amount of connection of the first friction clutch C1 and, at a moment t1 when a predetermined period of time has passed from the start t0 of control, it is decided if the driving force is insufficient. In an ordinary state of start, it is decided that the driving force is not insufficient. As shown in Fig. 4(a), therefore, the second-speed start is continued and the first friction clutch C1 is completely connected. The second friction clutch C2 remains disconnected and at this moment, the second input shaft S2 is shifted from the first speed to the third speed.

At the start on the way of a steep uphill road, on the other hand, if the amount of connection increases in a delayed manner due to a large slip and if it is decided at the moment t1 that the driving force is insufficient with the second-speed start, then the second friction clutch C2 is quickly connected as shown in Fig. 4(b) and the first friction clutch C1 is disconnected. The engine power is transmitted from the second friction clutch C2 to the output shaft S4 of the transmission through the gear train G1 of the first speed which has been in mesh already, and the driving force (torque) quickly increases to accelerate the vehicle. When the vehicle has reached a predetermined speed after the start, the transmission control unit TCU connects the first friction clutch C1 while disconnecting the second friction clutch C2, and the shift up to the second speed is executed.

### Industrial Applicability:

According to the start control apparatus for a freight vehicle mounting the dual clutch type transmission of the present invention as described above in detail, the dual clutch type transmission is set to the state of being shifted to the first speed and to the second speed, second-speed start is executed by increasing the amount of connection of the friction clutch coupled to the gear train of the second speed and if it is so decided that the driving force is insufficient, the transmission is readily shifted down to the first speed. Therefore, it needs not be pointed out that the present invention can be industrially utilized as a control apparatus for starting a vehicle that mounts the dual clutch type transmission, such as freight vehicles like trucks.

In the above embodiment, the timer starts counting the time at the beginning of control for connecting the friction clutch for second-speed start. However, the timer may start counting the time from a moment when the start of the vehicle is confirmed. Further, the embodiment can be modified in a variety of ways such as executing the shift from the first speed to the third speed by providing a waiting time after the friction clutch has been completely connected.

## Claims

1. A start control apparatus for controlling, at the start, a dual clutch type transmission mounted on a freight vehicle: wherein
said dual clutch type transmission comprises two input shafts (S1, S2) coupled to an engine through friction clutches (C1, C2), respectively, and a plurality of gear trains (G1, G2, G3, G4, G6) provided on each of said two input shafts (S1, S2) so as to constitute every other speeds; and
said start control apparatus comprises driving power judging means for judging if the driving power is insufficient at the start of said freight vehicle; and wherein
when said freight vehicle is at a halt, said dual clutch type transmission is set to a state of being shifted to the first speed and to the second speed;
at the start of said freight vehicle, the amount of connection of the friction clutch (C1) coupled to the gear train of the second speed (G2) is increased to have the vehicle start moving and, after the passage of a predetermined period of time, the driving force is judged by said driving force judging means, such that
if it is so judged that the driving force is insufficient, the amount of connection of the friction clutch (C2) coupled to the gear train of the first speed (G1) is increased, and the amount of connection of the friction clutch (C1) coupled to the gear train of the second speed (G2) is decreased, **characterized in that** at the start of said freight vehicle,
if it is so judged by said driving force judging means that the driving force is not insufficient, said start control apparatus shifts said dual clutch type transmission from the first speed, which has been set when said freight vehicle was at a halt, to the third speed.

2. The start control apparatus according to claim 1, wherein said start control apparatus detects a state of connection of the friction clutch (C1) coupled to the gear train of the second speed (G2) at the start of said freight vehicle, and if the state of complete connection is detected before the passage of the predetermined period of time, judging of the driving force by said driving force judging means is prohibited.

3. The start control apparatus according to claim 1, wherein said start control apparatus is provided with a first-speed start switch to be operated by a driver and, if said first-speed start switch is operated while the freight vehicle is at a halt, the control operation is prohibited at the start of said freight vehicle.

4. The start control apparatus according to claim 1, wherein said driving force judging means judges the excess or insufficiency of driving force from a relationship of a vehicle speed or a vehicle acceleration relative to the accelerator opening degree.

5. The start control apparatus according to claim 1, wherein said driving force judging means judges the excess or insufficiency of driving force from the amount of slip of the friction clutch (C1) coupled to the gear train of the second speed (G2) or from the energy absorbed by the clutch.

## Patentansprüche

1. Startsteuervorrichtung zum Steuern eines Getriebes vom Doppelkupplungstyp beim Start, das an einem Frachtfahrzeug angebracht ist: wobei
das Getriebe vom Doppelkupplungstyp zwei Antriebswellen (S1, S2), die über jeweilige Reibungskupplungen (C 1, C2) mit einem Motor gekoppelt sind, und mehrere Getriebezüge (G1, G2, G3, G4, G6) umfasst, die an jeder der beiden Antriebswellen (S1, S2) vorgesehen sind, um so alle anderen Gänge zu bilden; und
die Startsteuervorrichtung ein Antriebsleistungs-Bewertungsmittel umfasst, um zu beurteilen, ob die Antriebsleistung beim Start des Frachtfahrzeugs unzureichend ist; und wobei
bei Stillstand des Frachtfahrzeugs das Getriebe vom Doppelkupplungstyp auf einen Zustand eingestellt ist, in dem ein Schalten in den ersten Gang und in den zweiten Gang erfolgt;
beim Start des Frachtfahrzeugs der Einrückbetrag der Reibungskupplung (C1), die mit dem Getriebezug des zweiten Gangs (G2) gekoppelt ist, erhöht wird, damit das Fahrzeug anfängt, sich zu bewegen, und nach dem Ablauf eines vorbestimmten Zeitraums die Antriebskraft durch das Antriebskraft-Bewertungsmittel bewertet wird, so dass
bei einer Bewertung, gemäß der die Antriebskraft unzureichend ist, der Einrückbetrag der Reibungskupplung (C2), die mit dem Getriebezug des ersten Gangs (G1) gekoppelt ist, erhöht wird und der Einrückbetrag der Reibungskupplung (C1), die mit dem Getriebezug des zweiten Gangs (G2) gekoppelt ist, verringert wird,
**dadurch gekennzeichnet, dass** beim Start des Frachtfahrzeugs
bei einer Bewertung durch das Antriebskraft-Bewertungsmittel, gemäß der die Antriebskraft nicht unzureichend ist, die Startsteuervorrichtung das Getriebe vom Doppelkupplungstyp vom ersten Gang, der beim Stillstand des Frachtfahrzeugs einlegt wurde, in den dritten Gang schaltet.

2. Startsteuervorrichtung nach Anspruch 1, wobei die Startsteuervorrichtung beim Start des Frachtfahrzeugs einen Zustand des Einrückens der Reibungskupplung (C1) feststellt, die mit dem Getriebezug des zweiten Gangs (G2) gekoppelt ist, und, wenn der Zustand des vollständigen Einrückens vor dem Ablauf des vorbestimmten Zeitraums festgestellt wird, das Bewerten der Antriebskraft durch das Antriebskraft-Bewertungsmittel untersagt ist.

3. Startsteuervorrichtung nach Anspruch 1, wobei die Startsteuervorrichtung mit einem von einem Fahrer zu betätigenden Erstgang-Startschalter versehen ist und, wenn der Erstgang-Startschalter bei einem Stillstand des Frachtfahrzeugs betätigt wird, der Steuerungsvorgang beim Start des Frachtfahrzeugs untersagt ist.

4. Startsteuervorrichtung nach Anspruch 1, wobei das Antriebskraft-Bewertungsmittel die überschüssige oder unzureichende Antriebskraft aus einem Verhältnis einer Fahrzeuggeschwindigkeit oder einer Fahrzeugbeschleunigung zum Gaspedal-Öffnungsgrad bewertet.

5. Startsteuervorrichtung nach Anspruch 1, wobei das Antriebskraft-Bewertungsmittel die überschüssige oder unzureichende Antriebskraft aus dem Schlupfbetrag der Reibungskupplung (C1), die mit dem Getriebezug des zweiten Gangs (G2) gekoppelt ist, oder aus der von der Kupplung absorbierten Energie bewertet.

## Revendications

1. Appareil de commande de démarrage pour commander, au démarrage, une transmission du type à double embrayage montée sur un véhicule de transport de fret, dans lequel
ladite transmission du type à double embrayage comprend deux arbres d'entrée (S1, S2) couplés à un moteur via des embrayages à friction (C1, C2), respectivement, et une pluralité de trains d'engrenages (G1, G2, G3, G4, G6) prévus sur chacun desdits deux arbres d'entrée (S1, S2) de manière à constituer des rapports de vitesses différents ; et
ledit appareil de commande de démarrage comprend des moyens de jugement de puissance motrice pour juger si la puissance motrice est insuffisante au démarrage dudit véhicule de fret ; et dans lequel
quand ledit véhicule de fret est à l'arrêt, ladite transmission du type à double embrayage est mise dans un état où elle est passée vers le premier rapport de vitesses et vers le second rapport de vitesses ;
au démarrage dudit véhicule de fret, l'intensité de connexion de l'embrayage à friction (C1) couplé au train d'engrenages du second rapport de vitesses (G2) est augmentée pour que le véhicule commence à se déplacer et, après écoulement d'une période temporelle prédéterminée, la force motrice est jugée par lesdits moyens de jugement de puissance motrice, de telle façon que
s'il est jugé ainsi que la force motrice est insuffisante, l'intensité de connexion de l'embrayage à friction (C2) couplé au train d'engrenages du premier rapport de vitesses (G1) est augmentée, et l'intensité de connexion de l'embrayage à friction (C1) couplé au train d'engrenages du second rapport de vitesses (G2) est diminuée,
**caractérisé en ce que**, au démarrage dudit véhicule de fret,
s'il est ainsi jugé par lesdits moyens de jugement de force motrice que la force motrice n'est pas insuffisante, ledit appareil de commande de démarrage fait passer ladite transmission du type à double embrayage depuis le premier rapport de vitesses, qui a été engagé quand ledit véhicule de fret était à l'arrêt, vers le troisième rapport de vitesses.

2. Appareil de commande de démarrage selon la revendication 1, dans lequel ledit appareil de commande de démarrage détecte un état de connexion de l'embrayage à friction (C1) couplé au train d'engrenage du second rapport de vitesses (G2) au démarrage dudit véhicule de fret et, si l'état de connexion complète est détecté avant le passage de la période temporelle prédéterminée, un jugement de la force motrice par lesdits moyens de jugement de force motrice est empêché.

3. Appareil de commande de démarrage selon la revendication 1, dans lequel ledit appareil de commande de démarrage est doté d'un premier commutateur de démarrage du premier rapport de vitesses destiné à être actionné par un conducteur et, si ledit commutateur de démarrage du premier rapport de vitesses est actionné alors que le véhicule de fret est à l'arrêt, l'opération de commande est empêchée au démarrage dudit véhicule de fret.

4. Appareil de commande de démarrage selon la revendication 1, dans lequel lesdits moyens de jugement de force motrice jugent que la force motrice est excessive ou insuffisante, à partir d'une relation d'une vitesse du véhicule ou d'une accélération du véhicule par rapport au degré d'ouverture de l'accélérateur.

5. Appareil de commande de démarrage selon la revendication 1, dans lequel lesdits moyens de jugement de force motrice jugent que la force motrice est excessive ou insuffisante à partir de la quantité de glissement de l'embrayage à friction (C1) couplé au train d'engrenages du second rapport de vitesses (G2) ou depuis l'énergie absorbée par l'embrayage.
